# EUROPEAN PATENT APPLICATION

(11) **EP 3 904 116 A1**
(43) Date of publication of application: **03.11.2021**
(21) Application number: 19904959.4
(22) Date of filing: 12.12.2019
(51) Int. Cl.: B60C 1/00, B60C 9/18, B60C 9/22, B60C 17/00

(54) **RUN-FLAT TIRE**

(30) Priority: 26.12.2018 JP 2018243721
(71) Applicant: BRIDGESTONE CORPORATION, Chuo-ku Tokyo 104-8340 (JP)
(72) Inventor: KATAYAMA, Masahiro, Chuo-ku, Tokyo 104-8340 (JP)
(74) Representative: Oxley, Robin John George
(86) International application number: PCT/JP2019/048717
(87) International publication number: WO 2020/137587

(57) **Abstract**

A run-flat tire (10) has a belt-end reinforcing layer (80) provided between the tread portion (20) and a width outside end of the belt layer (50), and formed of a resin material. The belt-end reinforcing layer (80) is annular along a tire circumferential direction, has a predetermined width along the tire width direction, and is provided in the tire width direction so as to cover a radial outside end of a side reinforcing rubber (70) and a width outside end of the belt layer (50).

## Description

### [Technical Field]

The present invention relates to a run-flat tire of a side reinforcing rubber type.

### [Background Art]

Conventionally, a run-flat tire provided with a side reinforcing rubber having a crescent sectional shape is widely known (see Patent Literature 1).

### [Citation List]

### [Patent Literature]

[PTL 1] Japanese Unexamined Patent Application Publication No. 2011-031838

### [Summary of Invention]

In the case of the run-flat tire of the side reinforcing rubber type as described above, in order to improve the performance in the run flat traveling and to extend the run flat traveling distance, it is desirable to improve the bending rigidity of the belt layer. This is to suppress a phenomenon (so-called "outer bending") in which the tire width direction end of the belt layer swells outward from the tire radial direction.

However, simply adding a reinforcing layer or the like to improve the bending rigidity of the belt layer increases the weight of the tire or adversely affects other performance (steering stability, wear resistance, rolling resistance, etc.), which is undesirable.

Accordingly, an object of the present invention is to provide a run-flat tire capable of improving performance during run-flat traveling and extending the run-flat traveling distance while suppressing an increase in tire weight and other adverse effects on performance.

One aspect of the present invention is a run-flat tire including a tread portion in contact with a road surface, a belt layer provided inside a tire radial direction of the tread portion, a tire side portion continuous to the tread portion and positioned inside in the tire radial direction of the tread portion, a side reinforcing rubber provided in the tire side portion. The fun-flat tire comprises a belt-end reinforcing layer formed of a resin material and provided between the tread portion and outside end in the tire width direction of the belt layer. The belt-end reinforcing layer has an annular shape along a tire circumferential direction and has a predetermined width along the tire width direction, and in the tire width direction, the belt-end reinforcing layer is provided so as to cover an outside end in the tire radial direction of the side reinforcing rubber and an outside end in the tire width direction of the belt layer.

### [Brief Description of Drawings]

FIG. 1 is a cross-sectional view of a run-flat tire 10.
FIG. 2 is a partially enlarged cross-sectional view of the run-flat tire 10.
FIG. 3 is an exploded plan view of a portion of the run-flat tire 10.
FIG. 4 is a partially enlarged cross-sectional view of a run-flat tire 10 A according to modified example.
Figure 5 is an enlarged, partially cross-sectional view of a run-flat tire 10 B according to another modified example.
FIG. 6 is a partially enlarged cross-sectional view of a run-flat tire 10 C according to yet another modified example.

### [Description of Embodiments]

Embodiments will be described below with reference to the drawings. The same functions and configurations are denoted by the same or similar reference numerals, and descriptions thereof are omitted as appropriate.

### (1) Overall structure of tire

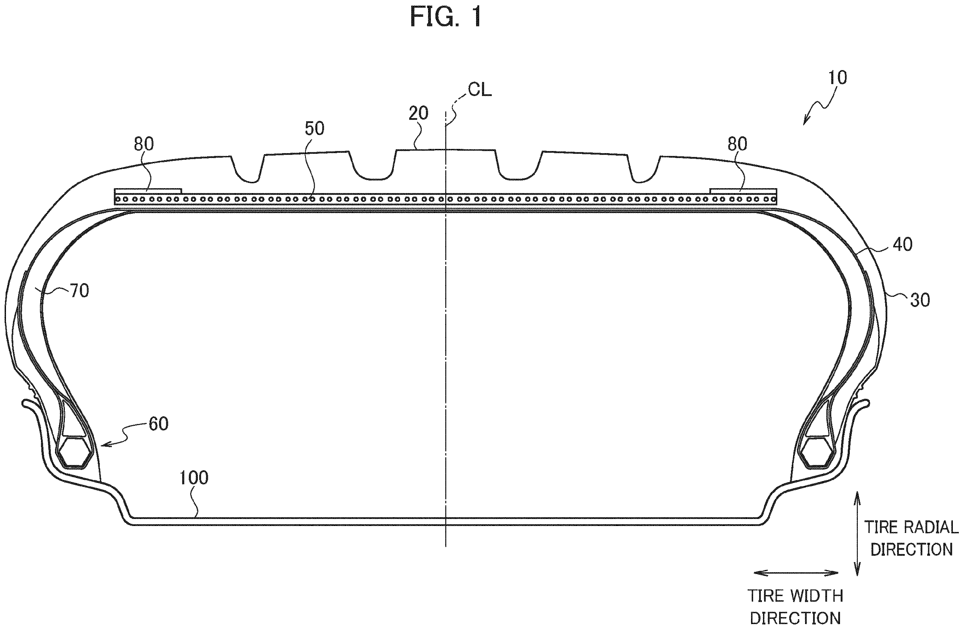

FIG. 1 is a sectional view of the run-flat tire 10 according to the present embodiment. Specifically, FIG. 1 is a cross-sectional view of the run-flat tire 10 along tire width direction and tire radial direction. In FIG. 1, the sectional hatching is not shown (hereinafter the same). In order to facilitate the differentiation of similar components, a schematic pattern is shown for some components.

The run-flat tire 10 is capable of running (run flat running) at a constant speed for a certain distance (80 km at 80 km/h) even when the internal pressure (air pressure) is significantly reduced due to a puncture or the like (e.g., 0 kPa).

As shown in FIG. 1, the run-flat tire 10 includes a tread portion 20, a tire side portion 30, a carcass 40, a belt layer 50, a bead portion 60, a side reinforcing rubber 70, and a belt-end reinforcing layer 80.

The tread portion 20 is a part in contact with a road surface (not shown). On the tread portion 20, a pattern (not shown) corresponding to the use environment of the run-flat tire 10 and the type of vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

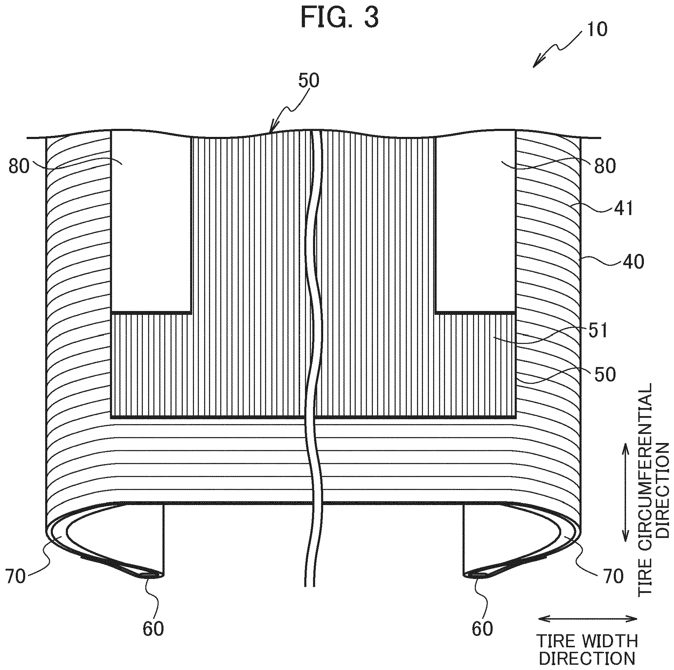

The carcass 40 forms a skeleton (tire skeleton) of a run-flat tire 10. The carcass 40 has a radial structure in which a carcass cord 41 (not shown in FIG. 1, see FIG. 3) arranged radially along a tire radial direction is covered with a rubber material. However, the present invention is not limited to a radial structure, and a bias structure in which the carcass cords are arranged so as to cross each other in the tire radial direction.

The carcass cord 41 is not particularly limited, and may be formed of an organic fiber cord in the same manner as a tire for a standard passenger car (including minivans and SUV (Sport Utility Vehicles)).

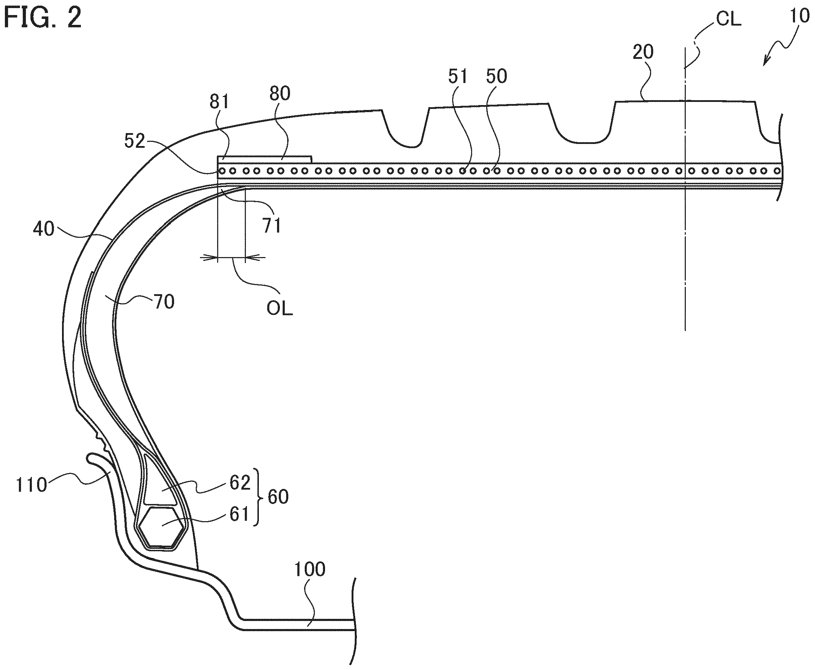

The belt layer 50 is provided inside the tire radial direction of the tread portion 20. The belt layer 50 has a circumferential cord 51 (not shown in FIG. 1, see FIG. 2), and the circumferential cord 51 is a single-layer spiral belt covered with a resin material.

Specifically, the circumferential cord 51 extends along the tire circumferential direction. More specifically, the circumferential cord 51 covered with a resin material is spirally wound along the tire circumferential direction to form the belt layer 50. The circumferential cords 51 may be wound in units of one or a plurality of cords.

As the resin for covering the circumferential cord 51, a resin material having a higher tensile elastic modulus than the tensile elastic modulus of the rubber material constituting the tire side portion 30 and the rubber material constituting the tread portion 20 are used. As the resin for covering the circumferential cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to tire side portion 30 and is positioned inside in tire radial direction of tire side portion 30. The bead portion 60 is an annular shape extending to the tire circumferential direction.

The bead portion 60 is locked to a flange portion 110 (not shown in FIG. 1, see FIG. 2) formed at the radially outside end of the rim wheel 100.

The side reinforcing rubber 70 is provided in the tire side portion 30. The side reinforcing rubber 70 has a crescent shape in cross section, and supports a load of a vehicle (not shown) to which the run-flat tire 10 is mounted when the internal pressure of the run-flat tire 10 greatly decreases.

The side reinforcing rubber 70 may be formed of one or more kinds of rubber materials, or may contain other materials (short fiber, resin, etc.) if the rubber material is a main component.

The belt-end reinforcing layer 80 reinforces an end portion in the tire width direction of the belt layer 50. The belt-end reinforcing layer 80 is formed of a resin material. The belt-end reinforcing layers 80 are provided on both shoulder portions of tread portion 20.

The belt-end reinforcing layer 80 can be formed by using the same resin material as the resin material covering the circumferential cord 51. However, the belt-end reinforcing layer 80 may not be formed of the same resin material as the resin material covering the circumferential cord 51. That is, as long as the above-described resin material can be used for the belt layer 50, the resin materials used for the belt layer 50 and the belt-end reinforcing layer 80 may be different.

### (2) Detailed structure of inside tire radial direction of tread portion

FIG. 2 is a partially enlarged sectional view of the run-flat tire 10. Specifically, FIG. 2 is a partially enlarged sectional view of the run-flat tire 10 taken along the tire width direction and the tire radial direction. FIG. 3 is a partially exploded plan view of the run-flat tire 10.

As shown in FIGs. 2 and 3, the bead portion 60 has a bead core 61 and a bead filler 62. In this structure example, the bead core 61 has a popular configuration and is formed by twisting a plurality of metal cords formed of steel or the like.

The bead filler 62 is a reinforcing member filled in a gap between the carcasses 40 folded back via the bead core 61, and is formed by using a rubber member harder than other parts.

The bead portion 60 may comprise a bead core formed by covering a metal cord with a resin material or a bead core formed by using a resin material.

The belt-end reinforcing layer 80 is provided between the tread portion 20 and a width outside end 52 being the tire width direction outside end of the belt layer 50. The belt-end reinforcing layer 80 reinforces an end portion in the tire width direction of the belt layer 50, specifically around the width outside end 52.

The belt-end reinforcing layer 80 is annular along the tire circumferential direction. The belt-end reinforcing layer 80 has a predetermined width along the tire width direction. Specifically, the belt-end reinforcing layer 80 has a width sufficient to cover the width outside end 52 of the belt layer 50 in the tire width direction.

In the tire width direction, the belt-end reinforcing layer 80 is provided so as to cover a radial outside end 71 which is a tire radial direction outside end of the side reinforcing rubber 70 and the width outside end 52 of the belt layer 50.

Specifically, the width outside end 81 which is the tire width direction outside end of the belt-end reinforcing layer 80 is positioned outside the tire width direction than the radial outside end 71 of the side reinforcing rubber 70. The width outside end 81 of the belt-end reinforcing layer 80 is positioned at substantially the same position in tire width direction as the width outside end 52 of the belt layer 50.

In the present embodiment, the side reinforcing rubber 70 and the belt layer 50 have overlapping portion OL in the tire width direction. The belt-end reinforcing layer 80 is provided to cover the overlapping portion OL in the tire width direction.

Although the thickness of the belt-end reinforcing layer 80 along the tire radial direction is not particularly limited, in order to suppress an increase in the weight of the tire, it is preferable that the thickness be thin while realizing the function of reinforcing the width outside end 52 of the belt layer 50. The belt-end reinforcing layer 80 may be formed by winding an extremely thin belt-like resin around the tire circumferential direction a plurality of times.

### (3)Function and effects

According to the embodiment described above, the following effects can be obtained. In the run-flat tire 10, the belt-end reinforcing layer 80 is annular along the tire circumferential direction. The belt-end reinforcing layer 80 has a predetermined width along the tire width direction. Further, the belt-end reinforcing layer 80 is provided so as to cover the radial outside end 71, which is the tire radial direction outside end of the side reinforcing rubber 70 and the width outside end 52 of the belt layer 50 in the tire width direction.

Therefore, the bending rigidity around the width outside end 52 of the belt layer 50 is improved. Since the belt-end reinforcing layer 80 is provided so as to cover the radial outside end 71 which is the tire radial direction outside end of the side reinforcing rubber 70 and the width outside end 52 of the belt layer 50 in the tire width direction, rigidity around the radial outside end 71 of the side reinforcing rubber 70 which is easy to be deformed during run-flat traveling can also be improved.

This effectively suppresses a phenomenon that the width outside end 52 of the belt layer 50 bends to the outside of the tire radial direction during run-flat traveling (so-called "outer bending"). The belt-end reinforcing layer 80 is made of a resin material, and does not significantly increase the tire weight, and has little adverse effect on other performances (steering stability, wear resistance, rolling resistance, etc.).

That is, the run-flat tire 10 can improve performance during run-flat traveling and extend the run-flat traveling distance while suppressing an increase in tire weight and adverse effects on other performances.

In this embodiment, the belt-end reinforcing layer 80 is provided so as to sandwich the overlapping portion OL between the side reinforcing rubber 70 and the belt layer 50. Therefore, the rigidity around the radial outside end 71 of the side reinforcing rubber 70 which is easy to be deformed during run flat traveling can be further improved. This can contribute to further performance improvement in run-flat traveling and further extension of run-flat traveling distance.

In this embodiment, the belt layer 50 is a belt in which the circumferential cords 51 extending along the tire circumferential direction are covered with a resin material. For this reason, even in the case of the belt layer 50 in which the bending rigidity around the width outside end 52 of the belt layer 50 tends to be lower than that of a popular crossing belt layer, the bending rigidity around the width outside end 52 can be effectively improved by the belt-end reinforcing layer 80.

### (4)Other Embodiments

Although the contents of the present invention have been described above with reference to the examples, it will be obvious to those skilled in the art that the present invention is not limited to these descriptions and that various modifications and improvements are possible.

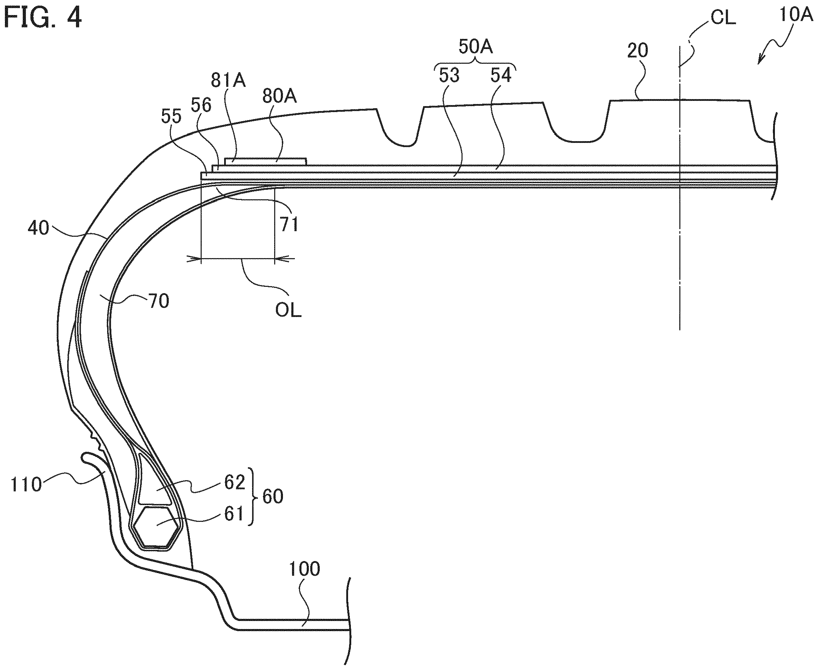

For example, the structure of the belt layer 50 may be modified as follows. FIG. 4 is a partially enlarged sectional view of a run-flat tire 10 A according to the modified example. As shown in FIG. 4, the run-flat tire 10 A includes a belt layer 50 A.

The belt layer 50 A is a pair of crossing belt layer having belt cords (not shown) crossed with each other. Specifically, the belt layer 50 A has a crossing belt 53 and a crossing belt 54 in which a belt cord is covered with rubber. The crossing belt 53 is provided outside the tire radial direction of the carcass 40. The crossing belt 54 is provided outside the tire radial direction of the crossing belt 53.

The belt-end reinforcing layer 80 A is provided so as to cover the radial outside end 71 of the side reinforcing rubber 70 in the tire width direction. A width outside end 55 being the tire width direction outer end of the crossing belt 53 and a width outside end 56 being the tire width direction outer end of the crossing belt 54 are positioned on the tire width direction outer side than the radial outside end 71 of the side reinforcing rubber 70.

The width outside end 81 A, which is the tire width direction outside end of the belt-end reinforcing layer 80 A is positioned outside the tire width direction than the radial outside end 71 of the side reinforcing rubber 70. The width outside end 55 of the crossing belt 53 and the width outside end 56 of the crossing belt 54 are positioned outside the tire width direction than the width outside end 81 A of the belt-end reinforcing layer 80 A.

Further, the belt-end reinforcing layer 80 A is provided so as to cover the overlapping part OL between the side reinforcing rubber 70 and the belt layer 50 in the tire width direction .

Similar to the run-flat tire 10 described above, the run-flat tire 10 A can improve performance during run flat traveling and extend a run flat traveling distance while suppressing an increase in tire weight and adverse effects on other performances.

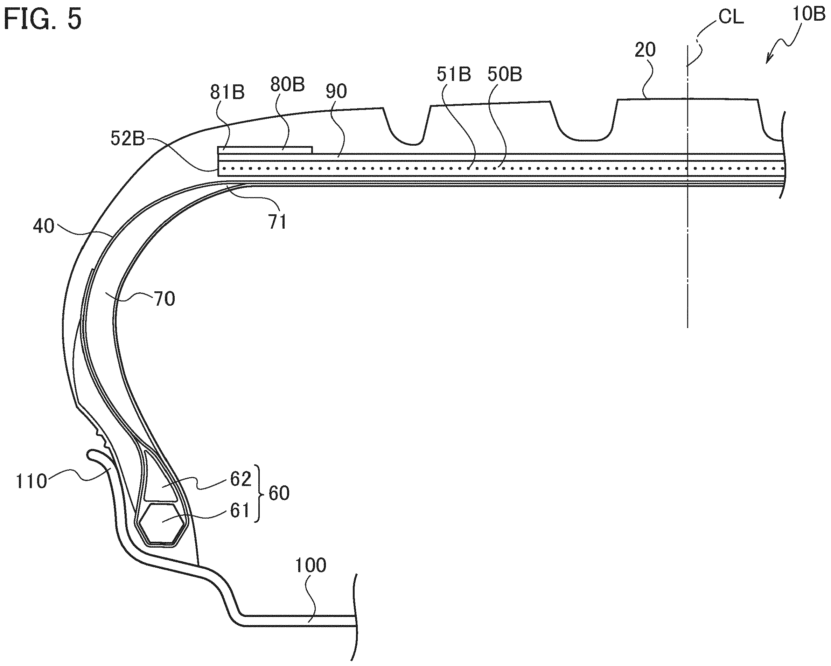

FIG. 5 is a partially enlarged sectional view of a run-flat tire 10 B according to another modified example. As shown in FIG. 5, the run-flat tire 10 B further includes a resin reinforcing layer 90 as compared to the run-flat tire 10.

The run-flat tire 10 B includes a belt layer 50 B. The belt layer 50 B is a belt in which a circumferential cord 51 B is covered by rubber.

The resin reinforcing layer 90 is formed of a resin material and is provided between a belt-end reinforcing layer 80 B and the belt layer 50. The resin reinforcing layer 90 is provided from one shoulder portion of the tread portion 20 to the other shoulder portion of the tread portion 20.

The belt-end reinforcing layer 80 B has a structure substantially similar to the belt-end reinforcing layer 80 of the run-flat tire 10. The width outside end 81 B, which is the tire width direction outside end of the belt-end reinforcing layer 80 B is positioned outside in the tire width direction than the radial outside end 71 of the side reinforcing rubber 70. The width outside end 81 B of the belt-end reinforcing layer 80 B is positioned substantially at the same position as the width outside end 52 B of the belt layer 50 B in tire width direction.

In the run-flat tire 10 B, the belt-end reinforcing layer 80 and the resin reinforcing layer 90 are overlapped at the shoulder portion of the tread portion 20, and the thickness (gauge) of the reinforcing layer for reinforcing the belt layer 50 is not uniform in tire width direction. Specifically, the thickness of the reinforcing layer in the shoulder portion of the tread portion 20 is thick. This can effectively improve bending rigidity, particularly around the width outside end 52 of the belt layer 50.

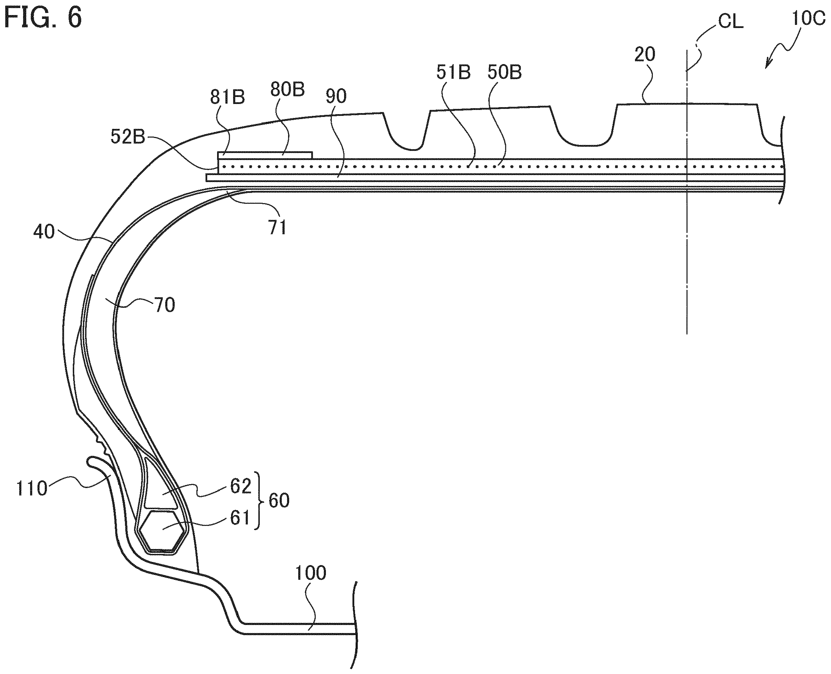

FIG. 6 is a partially enlarged sectional view of a run-flat tire 10 C according to another modified example. The run-flat tire 10 C is different from the run-flat tire 10 B in the position of the resin reinforcing layer 90.

Specifically, the resin reinforcing layer 90 is provided inside the tire radial direction of the belt layer 50. The same effect as that of the run-flat tire 10 B is expected by the run-flat tire 10 C.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

10, 10 A, 10 B, 10 C Run-flat tire
20 Tread portion
30 Tire side portion
40 Carcass
41 Carcass cord
50 , 50 A , 50 B Belt layer
51, 51 B Circumferential cord
52, 52 B Width outside end
53, 54 Crossing belt
55, 56 width outside end
60 Bead portion
61 Bead core
62 Bead filler
70 Side reinforcing rubber
71 Radial outside end
80, 80 A, 80 B Belt-end reinforcement layer
81, 81 A, 81 B Width outside end
90 Resin reinforcing layer
100 Rim wheel
110 Flange portion
OL Overlapping portion

## Claims

1. A run-flat tire comprising:
a tread portion in contact with a road surface;
a belt layer provided inside a tire radial direction of the tread portion;
a tire side portion continuous to the tread portion and positioned inside in the tire radial direction of the tread portion;
a side reinforcing rubber provided in the tire side portion, wherein the fun-flat tire comprises a belt-end reinforcing layer formed of a resin material and provided between the tread portion and outside end in the tire width direction of the belt layer, wherein
the belt-end reinforcing layer has an annular shape along a tire circumferential direction and has a predetermined width along the tire width direction, and
in the tire width direction, the belt-end reinforcing layer is provided so as to cover an outside end in the tire radial direction of the side reinforcing rubber and an outside end in the tire width direction of the belt layer.

2. The run-flat tire according to claim 1, wherein the side reinforcing rubber and the belt layer have overlapping portion in the tire width direction and
the belt-end reinforcing layer is provided to cover the overlapping portion.

3. The run-flat tire according to claim 1 or 2, wherein the belt layer is a belt having a circumferential cord extending along the tire circumferential direction coated with a resin material.

4. The run-flat tire according to claim 1 or 2, wherein the belt layer is a pair of crossing belts having belt cords crossing each other.

5. The run-flat tire according to any one of claims 1 to 4, comprising a resin reinforcing layer provided from one shoulder portion of the tread portion to the other shoulder portion of the tread portion, wherein
the resin reinforcing layer is formed of a resin material and is provided between the belt-end reinforcing layer and the belt layer.
